# EUROPEAN PATENT SPECIFICATION

(11) **EP 0 944 462 B1**
(45) Date of publication and mention of the grant of the patent: **04.07.2001**
(21) Application number: 97949313.7
(22) Date of filing: 12.12.1997
(51) Int. Cl.: B29C 35/16, B29C 45/73, B29C 33/02, B29C 39/38

(54) **A METHOD AND AN ARRANGEMENT FOR COOLING A MOULDING TOOL BY MEANS OF A LIQUEFIED GAS**
VERFAHREN UND ANORDNUNG ZUR KÜHLUNG EINES FORMWERKZEUGS DURCH FLÜSSIGGAS
PROCEDE ET SYSTEME DE REFROIDISSEMENT D'UN OUTIL DE MOULAGE A L'AIDE DE GAZ COMPRIME

(30) Priority: 13.12.1996 SE 9604592
(43) Date of publication of application: 29.09.1999
(73) Proprietor: AGA AKTIEBOLAG, 181 81 Lidingö (SE)
(72) Inventor: LARSSON, Owe, S-263 54 Höganäs (SE)
(74) Representative: Axelsson, Rolf
(86) International application number: SE9702073
(87) International publication number: WO9825746

(56) References cited:
- WO-A-96/19308
- US-A- 5 516 470

## Description

The present invention relates to a method of cooling a mould tool that is comprised of or includes at least in part a porous material that has communicating pores, such as a microporous metal or metal alloy, with the aid of condensed gas, preferably CO₂, which is delivered to the porous material in an essentially liquid state and caused to vaporise as a result of a drop in pressure in cavities and pores in said material, and therewith effectively cool the tool. The invention also relates to an arrangement for use in carrying out the method.

AGA AB market under the trademark TOOLVAC a novel technique and a novel type of plastic moulding tool, particularly an injection moulding tool. The same technique can also be used to produce ceramic and/or metallic shapes; see, for instance, US-A 5,516,470 and WO 96/19308. These tools are comprised either completely or partially of microporous material, i.e. a material that includes a large number of communicating pores. These pores allow fluid delivered to the material to pass therethrough.

For instance, in the case of an injection moulding tool where at least a part of the mould cavity is delimited by a body comprised of such material, the moulded product can be cooled effectively by, e.g., delivering liquid carbon dioxide to the porous material, wherewith the gas will expand in the micropores and vaporise while extracting heat from the surrounding material and therewith generate an effective cooling effect. The cooling effect can be distributed as desired, e.g. by providing different cavities in the material. Because the cooling effect is much greater than that which can be achieved with conventional water cooling, it is possible to achieve significantly shorter cooling times and therewith shorter tool cycle times.

With tools of this kind used hitherto, the cooling gas, normally CO₂, is released to the surrounding atmosphere after having vaporised in the microporous material.

From an environmental aspect, there is a general endeavour to reduce the amount of CO₂ that is released to the atmosphere and it is desired, accordingly, to eliminate the discharge of gas to the atmosphere or at least substantially reduce the amount of cooling gas that is required in the cooling process. Furthermore, the cooling gas used must be very clean as the pores in the microporous material used are very small. When using CO₂, it must be ensured, in this regard, that the gas is essentially free from oil, which would otherwise clog the pores. It may therefore be necessary to purify the gas received from the supplier before the gas can be used to cool the tool. Substantial cost savings can thus be made when it is possible to reduce the amount of highly pure CO₂ required to achieve the desired cooling effect.

Accordingly, the main object of the present invention is to provide a moulding tool cooling technique of the aforesaid kind which utilizes condensed gas, said technique enabling the amount of gas consumed in cooling the tool to be greatly reduced.

The present invention is based on the realisation that this object can be achieved with a closed cooling circuit in which the microporous material is included as a circuit component, and which also includes, among other things, a condenser for renewed condensation of the gas vaporised in the microporous material.

A method of the kind defined in the first paragraph is particularly characterized by channelling the gas vaporised in the porous material to one or more conductors sealingly connected to the material and functioning to conduct the gas to a condenser in which the gas is again condensed, and by again delivering the condensed gas to the porous material, said material being used as a communication link in the resultant closed tool-cooling circuit.

Thus, according to the invention, the mould tool is cooled with the aid of a coolant, e.g. CO₂, which circulates in a closed cooling circuit, therewith greatly reducing gas consumption, since solely losses caused by leakage and the like need be replaced.

Supplementary gas for compensating such losses may suitably be delivered to the condenser included in the cooling circuit, essentially in gas phase. The gas can be delivered from a storage tank or storage bottle that contains liquefied gas which is gasified, wherewith any oil in the gas will be removed prior to delivering the gas to the condenser. Alternatively, the supplementary gas can be extracted from the ambient air, preferably with the aid of a membrane extraction technique, and delivered to the condenser.

The special characteristic features of an inventive arrangement for use in carrying out the method will be apparent from the following Claims.

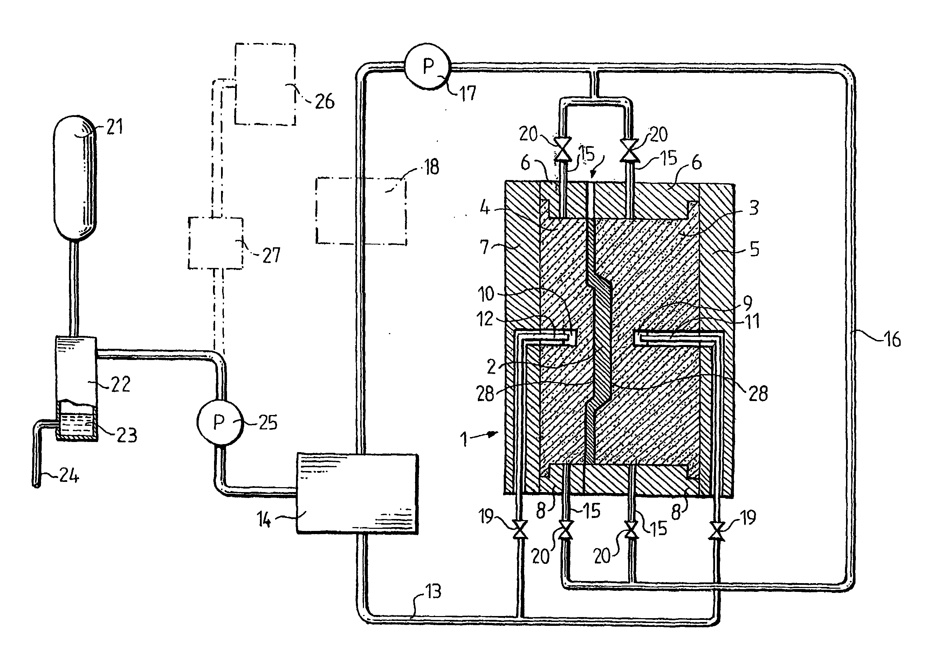

The invention will now be described in more detail with reference to an exemplifying embodiment of an innovative cooling system that includes a microporous mould tool as illustrated in the accompanying drawing.

Shown in the drawing is a tool 1 for injection-moulding a plastic product 2. Each mould half of the tool includes a respective mould insert 3 and 4 made of a porous but shape-stable material, such as sintered steel, with communicating pores. The porous inserts 3 and 4 in the tool are surrounded by non-porous parts 5-8. The inserts 3 and 4 include respective expansion cavities 9 and 10 into which respective capillaries 11 open out. In the illustrated case, respective capillaries open freely into associated expansion cavities. Alternatively, however, the capillaries may extend up to the end wall of respective cavities. The pores in the porous material of the inserts 3 and 4 are closed over the surfaces 28 that face towards the mould cavity in which the product 2 is moulded. This can be achieved with a thin covering of aluminiumtrioxide or nickel, for instance. The remaining outer surfaces of the inserts 3 and 4 are sealed by means of the surrounding non-porous parts 5-8.

The reader is referred to the aforesaid patent specifications for a more detailed description of the injection moulding tool and its function.

Condensed gas, in the illustrated case condensed CO₂, is delivered to the capillaries 11, 12 from a condenser 14, via a conduit 13. In order to avoid the gas in the condenser 14 being contaminated or mixed with other gases, the condenser is suitably comprised of one chamber of a heat exchanger whose other chamber is connected to a cooling machine (not shown).

As condensed CO₂ is delivered to the cavities 9, 10 via respective capillaries 11 and 13, it will immediately expand as a result of a pressure drop and convert to a gas phase, thereby generating a powerful cooling effect. The gas is dispersed in the communicating pores in the inserts 3 and 4, and is finally evacuated through evacuation channels 15 that are connected by a common conduit 16 to the input of a pump 17 whose output is connected to the condenser 14, suitably via an intermediate storage container 18.

The illustrated embodiment includes four evacuation channels 15. It will be understood, however, that the number of channels provided can be varied as required. In addition to contributing towards the cooling of a moulded product, the capillaries 11, 12 and the evacuation channels 15 can also be used to pass a warm, or hot, fluid through the inserts 3 and 4 with the intention of heating the mould surfaces prior to or in conjunction with forcing the mould materi al into the mould cavity. Reference numerals 19 and 20 designate a number of regulating valves mounted in the connections to the capillaries 11, 12 and to the evacuation channels 15, to enable the fluid passing through the inserts 3 and 4 to be controlled as required for cooling and heating or warming the tool respectively.

As will be apparent from the aforegoing, the invention provides a closed system for cooling a mould tool that includes inserts of microporous material, these inserts being included as essential communication links in the resultant cooling circuit. Because the cooling circuit is thereby completely closed, the carbon dioxide used will not be diluted with other gases or be otherwise contaminated. The effect of the method on the environment will be very slight, since no emission to the surroundings takes place. This also results in good economic use of the pure carbon dioxide required.

It is, however, difficult to avoid the loss of a certain amount of carbon dioxide, e.g. in the order of some few percent of the volume circulating in the closed cooling circuit. A storage container or storage bottle 21 containing liquefied carbon dioxide is provided for the purpose of making up this loss. The liquefied carbon dioxide is vaporised in an evaporator 22 that includes an oil separator, where separated oil 23 for instance can be drained through an outlet 24. The pure carbon dioxide is pumped to the condenser 14 in a gas phase, by means of a pump 25.

Alternatively, gaseous CO₂ can be produced from the ambient air with the aid of a membrane separator 26. This carbon dioxide is delivered directly to the condenser 14 via the pump 15. An intermediate storage container 27 is suitably connected between the membrane separator 26 and the pump 25. It is possible in this regard that other gases present need to be separated in the condensation process. This separation, however, can be readily achieved by the person skilled in this art.

Although the invention has been described with reference to a preferred embodiment thereof, it will be understood that variations can be made in several respects within the scope of the Claims with regard to structural details, while maintaining the basic inventive principle of a closed cooling circuit of which said microporous material forms a part.

## Claims

1. A method of cooling a mould tool comprised of or including at least in part a porous material that has communicating pores, such as a microporous metal or metal alloy, with the aid of condensed gas, preferably CO₂, which is delivered to the porous material in an essentially liquid state and caused to vaporise as a result of pressure drops in cavities and pores in the material, so as to achieve effective cooling of the tool, and then is channelled to one or more conductors which are sealingly connected to said material, **characterized** in that the conductors conduct gas to a condenser for renewed condensation of the gas, and in that the condensed gas is again delivered to the porous material, said material being utilized as a communications link in the resultant closed tool-cooling circuit.

2. A method according to Claim 1, **characterized** in that the surface of the porous material is sealed at other positions in addition to those positions at which the conductors for delivering and evacuating gas are connected.

3. A method according to Claim 1 or 2, **characterized** in that supplementary gas is delivered to the closed cooling circuit to compensate for gas losses.

4. A method according to Claim 3, **characterized** in that the supplementary gas is delivered to the condenser in said cooling circuit substantially in a gaseous state.

5. A method according to Claim 4, in which the supplementary gas is stored in a liquid state in a storage tank or a storage bottle, **characterized** in that gas from the tank or bottle is vaporised and that any oil present in the gas is removed therefrom prior to the gas entering the condenser.

6. A method according to Claim 4, **characterized** in that the supplementary gas is taken from the ambient air, preferably with the aid of a membrane separation technique, and in that the thus extracted gas is delivered to the condenser.

7. Apparatus for cooling a mould tool that is comprised of or includes at least in part (3, 4) a porous material that has communicating pores, such as a microporous metal or metal alloy, with the aid of condensed gas, preferably CO₂, delivered to the porous material (3, 4) in an essentially liquid state and caused to vaporise as a result of pressure drops in cavities (9, 10) and pores in the material and therewith effectively cool the tool, **characterized** in that the apparatus includes a closed tool-cooling circuit that has sealingly connected to said porous material (3, 4) one or more conductors (15) for evacuating gas vaporised in said material, a condenser (14) connected to said conductor or conductors for renewed condensation of the evacuated gas, and conduit means (13) for renewed delivery of the condensed gas to the porous material (3, 4), said porous material forming a communications link in the closed cooling circuit.

8. Apparatus according to Claim 7, **characterized** in that the porous material (3, 4) is sealed at positions other than those positions at which the conductors (11, 12, 15) for delivering and evacuating gas are connected.

9. Apparatus according to Claim 7 or 8, **characterized** by means for delivering supplementary gas from a storage tank (21) or storage bottle containing liquefied gas, said means including an oil-separating vaporiser (22) connected between the tank or the bottle and the condenser (14) included in said cooling circuit.

10. Apparatus according to Claim 7 or 8, **characterized** in that the apparatus includes a unit (26) for extracting gas from the ambient air for the purpose of supplying supplementary gas, said unit being connected to the condenser (14) included in said cooling circuit via an intermediate storage container (18).

## Patentansprüche

1. Verfahren zum Kühlen eines Formwerkzeugs, das mindestens teilweise aus einem porösen Material besteht oder ein solches umfaßt, das kommunizierende Poren aufweist, wie beispieisweise ein mikroporöses Metall oder Metallegierung, mit Hilfe von verdichtetem Gas, vorzugsweise CO₂, welches zu dem porösen Material in einem im wesentlichen flüssigen Zustand zugeführt wird und infolge von Druckabnahmen in Hohlräumen und Poren im Material zum Verdampfen gebracht wird, um auf diese Weise effektives Kühlen des Werkzeugs zu erreichen, und dann zu einer oder mehreren Leitungen geleitet wird, die dichtend mit dem genannten Material verbunden sind, dadurch gekennzeichnet, daß die Leitungen Gas zu einem Verdichter zum wiederholten Verdichten des Gases leiten, und daß das verdichtete Gas wieder zum porösen Material zugeführt wird, wobei das Material als Durchgangsverbindung in dem resultierenden geschlossenen Werkzeug-Kühlkreislauf verwendet wird.

2. Verfahren nach Anspruch 1, dadurch gekennzeichnet, daß die Oberfläche des porösen Materials an anderen Stellen zusätzlich zu den Stellen, an denen die Leitungen zum Zuführen und Abführen von Gas verbunden sind, versiegelt ist.

3. Verfahren nach Anspruch 1 oder 2, dadurch gekennzeichnet, daß Zusatzgas zu dem geschlossenen Kühlkreislauf zum Ersetzen von Gasverlusten zugeführt wird.

4. Verfahren nach Anspruch 3, dadurch gekennzeichnet, daß das Zusatzgas zu dem Verdichter in dem Kühlkreislauf im wesentlichen in gasförmigem Zustand zugeführt wird.

5. Verfahren nach Anspruch 4, wobei das Zusatzgas im flüssigen Zustand in einem Speichertank oder einer Speicherflasche gespeichert wird, dadurch gekennzeichnet, daß Gas vom Tank oder von der Flasche verdampft wird und jedes im Gas vorhandene öl davon entfernt wird, bevor das Gas in den Verdichter eintritt.

6. Verfahren nach Anspruch 4, dadurch gekennzeichnet, daß das Zusatzgas von der Umgebungsluft genommen wird, vorzugsweise mit Hilfe einer Membrantrenntechnik, und daß das auf diese Weise extrahierte Gas zu dem Verdichter zugeführt wird.

7. Vorrichtung zum Kühlen eines Formwerkzeugs, das mindestens teilweise (3, 4) aus einem porösen Material besteht oder ein solches umfaßt, das kommunizierende Poren aufweist, wie beispielsweise ein mikroporöses Metall oder Metallegierung, mit Hilfe von verdichtetem Gas, vorzugsweise CO₂, welches zu dem porösen Material (3, 4) in einem im wesentlichen flüssigen Zustand zugeführt wird und infolge von Druckabnahmen in Hohlräumen (9, 10) und Poren im Material zum Verdampfen und dadurch zum effektiven Kühlen des Werkzeugs gebracht wird, dadurch gekennzeichnet, daß die Vorrichtung einen geschlossenen Werkzeug-Kühlkreislauf umfaßt, der eine oder mehrere dichtend mit dem porösen Material (3, 4) verbundene Leitungen (15) zum Abführen von in dem Material verdampftem Gas, einen mit der Leitung oder den Leitungen verbundenen Verdichter (14) zur wiederholten Verdichtung des abgeführten Gases, und Leitungsmittel (13) zum wiederholten Zuführen des verdichteten Gases zu dem porösen Material (3, 4) aufweist, wobei das poröse Material eine Durchgangsverbindung in dem geschlossenen Kühlkreislauf bildet.

8. Vorrichtung nach Anspruch 7, dadurch gekennzeichnet, daß das poröse Material (3, 4) an anderen Stellen als den Stellen, an denen die Leitungen (11, 12, 15) zum Zuführen und Abführen von Gas verbunden sind, versiegelt ist.

9. Vorrichtung nach Anspruch 7 oder 8, gekennzeichnet durch Mittel zum Zuführen von Zusatzgas von einem verflüssigtes Gas enthaltenden Speichertank oder Speicherflasche gespeichert wird, wobei die Mittel einen Öl-abscheidenden Verdampfer (22) aufweisen, der zwischen dem von dem Kühlkreislauf umfaßten Tank oder Flasche und dem Verdichter (14) verbunden ist.

10. Vorrichtung nach Anspruch 7 oder 8, dadurch gekennzeichnet, daß die Vorrichtung eine Einheit (26) zum Extrahieren von Gas aus der Umgebungsluft zum Zwecke des Zuführens von Zusatzgas aufweist, wobei die Einheit mit dem von dem Kühlkreislauf umfaßten Verdichter (14) über einen Zwischenspeicherbehälter (18) verbunden ist.

## Revendications

1. Procédé pour refroidir un outil de moulage constitué par ou comprenant au moins en partie un matériau poreux qui comporte des pores de communiquants, comme par exemple un métal ou un alliage métallique microporeux, à l'aide d'un gaz condensé, de préférence du CO₂, qui est appliqué au matériau poreux dans un état essentiellement liquide et est amené à se vaporiser sous l'effet de baisses de pression dans des cavités et des pores présents dans le matériau de manière à réaliser un refroidissement efficace de l'outil, puis est canalisé vers un ou plusieurs conduits qui sont raccordés de façon étanche audit matériau, caractérisé en ce que les conduits véhiculent un gaz jusqu'à un condenseur servant à réaliser une condensation renouvelée du gaz, et en ce que le gaz condensé est à nouveau envoyé au matériau poreux, ledit matériau étant utilisé en tant que lien de communication dans le circuit fermé résultant de refroidissement de l'outil.

2. Procédé selon la revendication 1, caractérisé en ce que la surface du matériau poreux est étanchéifiée dans d'autres positions en plus des positions dans lesquelles sont raccordés les conduits pour la délivrance et l'évacuation du gaz.

3. Procédé selon la revendication 1 ou 2, caractérisé en ce que du gaz supplémentaire est envoyé au circuit fermé de refroidissement pour compenser des pertes de gaz.

4. Procédé selon la revendication 3, caractérisé en ce que le gaz supplémentaire est envoyé au condenseur dans ledit circuit de refroidissement, essentiellement dans un état gazeux.

5. Procédé selon la revendication 4, dans lequel le gaz supplémentaire est stocké à l'état liquide dans un réservoir de stockage ou une bouteille de stockage, caractérisé en ce que le gaz provenant du réservoir ou de la bouteille est vaporisé et que la totalité de l'huile présente dans le gaz en est retirée avant que le gaz pénètre dans le condenseur.

6. Procédé selon la revendication 1, caractérisé en ce que le gaz supplémentaire est prélevé de l'air ambiant, de préférence à l'aide d'une technique de séparation à membrane et que le gaz ainsi extrait est envoyé au condenseur.

7. Dispositif pour refroidir un outil de moulage, qui est constitué par ou inclut au moins en partie (3,4) un matériau poreux qui possède des pores de communiquants, comme par exemple un métal ou un alliage métallique micro-poreux, à l'aide d'un gaz condensé, de préférence du CO₂, envoyé au matériau poreux (3,4) dans un état essentiellement liquide et amené à se vaporiser sous l'effet de chutes de pression dans des cavités (9,10) et des pores présents dans le matériau et refroidir de ce fait efficacement l'outil, caractérisé en ce que le dispositif comprend un circuit fermé de refroidissement d'outil qui comporte un ou plusieurs conduits (15) qui sont raccordés de façon étanche audit matériau poreux (3,4) et servent à évacuer un gaz vaporisé dans ledit matériau, un condenseur (14) raccordé au (x) dit (s) conduit(s) pour une condensation renouvelée du gaz évacué, et des moyens formant conduits (13) pour la délivrance renouvelée du gaz condensé au matériau poreux (3,4), ledit matériau poreux établissant une liaison de communication dans le circuit fermé de refroidissement.

8. Dispositif selon la revendication 7, caractérisé en ce que le matériau poreux (3,4) est étanchéifié dans des positions autres que les positions dans lesquelles sont raccordés les conduits (11,12,15) pour la délivrance et l'évacuation du gaz.

9. Dispositif selon la revendication 8 ou 9, caractérisé par des moyens pour délivrer du gaz supplémentaire depuis un réservoir de stockage (21) ou une bouteille de stockage dans du gaz liquéfié, lesdits moyens comprenant un évaporateur à séparation d'huile (22) branché entre le réservoir ou la bouteille et le condenseur (14) inclus dans ledit circuit de refroidissement.

10. Dispositif selon la revendication 7 ou 8, caractérisé en ce que le dispositif comprend une unité (26) pour extraire du gaz à partir de l'air ambiant de manière à délivrer du gaz supplémentaire, ladite unité étant raccordée au condenseur (14) contenu dans ledit circuit de refroidissement par l'intermédiaire d'un récipient de stockage intermédiaire (18).
